# EUROPÄISCHE PATENTSCHRIFT

(11) **EP 0 935 127 B1**
(45) Veröffentlichungstag und Bekanntmachung des Hinweises auf die Patenterteilung: **09.06.2010**
(21) Anmeldenummer: 99100040.7
(22) Anmeldetag: 05.01.1999
(51) Int. Cl.: G01F 23/284, H01Q 13/20, H01Q 13/24, H01Q 1/22

(54) **Antenneneinrichtung für ein Füllstandmess-Radargerät**
Antenna device for level radar
Dispositif d'antenne pour radar de mesure du niveau

(30) Priorität: 07.01.1998 DE 19800306
(43) Veröffentlichungstag der Anmeldung: 11.08.1999
(73) Patentinhaber: VEGA Grieshaber KG, 77709 Wolfach (DE)
(72) Erfinder: Fehrenbach, Josef, 77716 Haslach i.K. (DE); Schultheiss, Daniel, 78132 Hornberg (DE)
(74) Vertreter: Patentanwälte Westphal, Mussgnug & Partner

(56) Entgegenhaltungen:
- EP-A- 0 350 324
- DE-A- 3 023 055
- DE-A- 3 129 425
- PATENT ABSTRACTS OF JAPAN, Band 11, Nr. 011, 26. Dezember 1995; & JP 07 212124 A (FUJITSU) 11. August 1995,

## Beschreibung

Die Erfindung betrifft eine Antenneneinrichtung für ein Füllstandsmess-Radargerät gemäß den Merkmalen des Oberbegriffs des Anspruchs 1.

Eine solche Antenneneinrichtung zeigt z. B. die US 5,406,842.

Antenneneinrichtungen für Füllstandsmessgeräte, die mit Mikrowellen arbeiten, sind hinlänglich bekannt und werden beispielsweise zur kontinuierlichen Füllstandsmessung sowohl bei Flüssigkeiten als auch bei Schüttgütern eingesetzt. Das Messprinzip beruht darauf, kurze Mikrowellenimpulse von einem Hochfrequenzstrahler (HF-Strahler) auszusenden. In einem kombinierten Sende- und Empfangssystem werden die vom Füllgut reflektierten Impulse erfasst und durch Laufzeitmessung dieser Impulse der Abstand zum Füllgut ermittelt.

Die Einkopplung der Mikrowellen in das Behälterinnere erfolgt über einen geeigneten HF-Strahler, wobei darauf zu achten ist, dass sich im Behälter keinerlei temperatur- sowie korrosionsempfindliche Komponenten der Antenneneinrichtung befinden.

Um die Mikrowellen möglichst eng gebündelt auf die Füllgutoberfläche zu lenken, werden bei den Füllstandmess-Radargeräten regelmäßig sogenannte Hochgewinnantennen eingesetzt. Hierbei ist die Divergenz, d.h. der Öffnungswinkel eines Antennenstrahls umgekehrt proportional zu ihrem Größen-/Wellenlängenverhältnis. Dies hat zur Folge, dass bei gegebener Wellenlänge und diversen konstruktiven Randbedingungen, Öffnungswinkel von einigen Grad bis etwa 40° gebrauchsübliche Dimensionen darstellen.

Die bei der Füllstandmessung mittels Mikrowellen am meisten verbreitete Antenneneinrichtung ist die Hornantenne. Eine üblicherweise aus Metall bestehende Trichterkonstruktion bestimmt mit ihrer Geometrie die Antennencharakteristika, wie z. B. Gewinn, Divergenz und Strahlungsdiagramm. Das Trichtermaterial wird vorzugsweise aus weitgehend chemisch resistenten Metallen hergestellt. Aus dem deutschen Gebrauchsmuster G 93 12 251.9 der Anmelderin ist ein Füllstandsmess-Radargerät bekannt, bei dem zwischen Erregerteil eines Hohlleiter-Antennensystems und dem Gehäuse des Sende- und Empfangsteils eine diffusions- und druckdichte Glasdurchführung angeordnet ist, welche eine Füllstandmessung mit Hornantennen auch in Behältern mit brennbaren und/oder explosiblen Medien erlaubt.

Die Hornantenne ist für die meisten Anwendungen der beste Kompromiss zwischen den Anforderungen Divergenz, Druck, Temperatur, chemischer Beständigkeit und Herstellungsaufwand.

Darüber hinaus sind mittlerweile auch dielektrische Stabantennen für das Abstrahlen von Mikrowellen bekannt, wie beispielsweise die Druckschrift "IEEE Transactions on Antennas and Propagation", Vol. AP-30, No. 1, Januar 1982, S. 4-58, zeigt. Diese dielektrischen Stabantennen bestehen im wesentlichen aus einem Hohlleiter, an dessen Ende ein sich vorzugsweise in Abstrahlrichtung verjüngter Stab aus dielektrischem Material sitzt.

Aus dem deutschen Gebrauchsmuster 94 12 243.1 der Anmelderin ist ebenfalls eine dielektrische Stabantenne für ein Füllstandmess-Radargerät bekannt. Eine hohe chemische Beständigkeit, Druckfestigkeit und Korrosionsbeständigkeit wird dadurch erreicht, dass die dielektrische Stabantenne auf ihrer dem Behälter zugewandten Seite mit einer korrosionsbeständigen und für die elektromagnetischen Wellen durchlässigen Schutzschicht, vorzugsweise aus Email, Kunststoff oder Keramik, überzogen ist. Diese bekannte Konstruktion ermöglicht die Montage der dielektrischen Stabantenne in relativ dünnen Rohrstutzen unter Beibehaltung eines erforderlichen geringen Öffnungswinkels.

Allen diesen Antenneneinrichtungen zur Füllstandmessung ist ein an eine Koaxialleitung angeschlossener Erregerstift zur HF-Einkopplung gemeinsam, welcher radial zur Abstrahlrichtung der Antenneneinrichtung durch die Seitenwandung eines becherartigen Metallmantels geführt ist. An den Metallmantel schließt sich ein Hohlleiter mit einem dielektrischen Stabstrahler, welcher sich in Abstrahlrichtung der Antenneinrichtung vorzugsweise kegelartig verjüngt, an.

Problematisch bei dieser "seitlichen" Einkopplung von HF-Energie ist sowohl der verhältnismäßig komplizierte Aufbau und der hiermit verbundene Montageaufwand als auch der verhältnismäßig radiale Bauraum der Anordnung.

Der Erfindung liegt die Aufgabe zugrunde, die bekannte Antenneneinrichtung für ein Füllstandmess-Radargerät mit dielektrischem Stabstrahler derart weiterzubilden, dass ein einfacherer Aufbau mit verkleinertem Bauraum bei zugleich verbesserter Abstrahlcharakteristik möglich ist.

Diese Aufgabe wird durch eine Antenneneinrichtung mit den Merkmalen des Anspruchs 1 gelöst.

Weiterbildungen der Erfindung sind Gegenstand der Unteransprüche.

Die Erfindung beruht darauf, anstelle der seitlichen HF-Einkopplung mit Erregerstift eine axiale HF-Einkopplung der Mikrowellen am stirnseitigen Ende des Hohlleiters mittels mindestens einem planaren Strahlerelement Patch-Element) vorzusehen.

Erfindungsgemäß sitzt das planare Strahlerelement auf einem plattenförmigen Substrat, das auf der zum Strahlerelement abgewandten Oberfläche mit einer elektrisch leitenden Schicht versehen ist und eine Dielektrizitätskonstante ε1 aufweist. Mit dieser Struktur wird eine Abstrahlung der Mikrowellen orthogonal zur Ebene des Strahlerelementes ermöglicht. Der Hohlleiter selbst ist mit einem Material gefüllt, das eine Dielektrizitätskonstante ε2 aufweist. Dieses Material ist ein dielektrisches Material, wobei darauf zu achten ist, dass ε1 > ε2 ist. Dies stellt sicher, dass die Abmessungen des Strahlerelementes auf jeden Fall kleiner als der Durchmesser des Hohlleiters sein dürfen.

Die Erfindung und deren weitere zweckmäßige Ausgestaltungen werden nachfolgend im Zusammenhang mit einem Ausführungsbeispiel anhand von zwei Figuren näher erläutert. Es zeigen:
- Fig. 1:: eine bekannte Antenneneinrichtung nach dem Stand der Technik,
- Fig. 2:: eine Teilansicht der erfindungsgemäßen Antenneneinrichtung in Schnittdarstellung im Bereich der HF-Einkopplung.

In den nachfolgenden Figuren bezeichnen, sofern nicht anders angegeben, gleiche Bezugszeichen gleiche Teile mit gleicher Bedeutung.

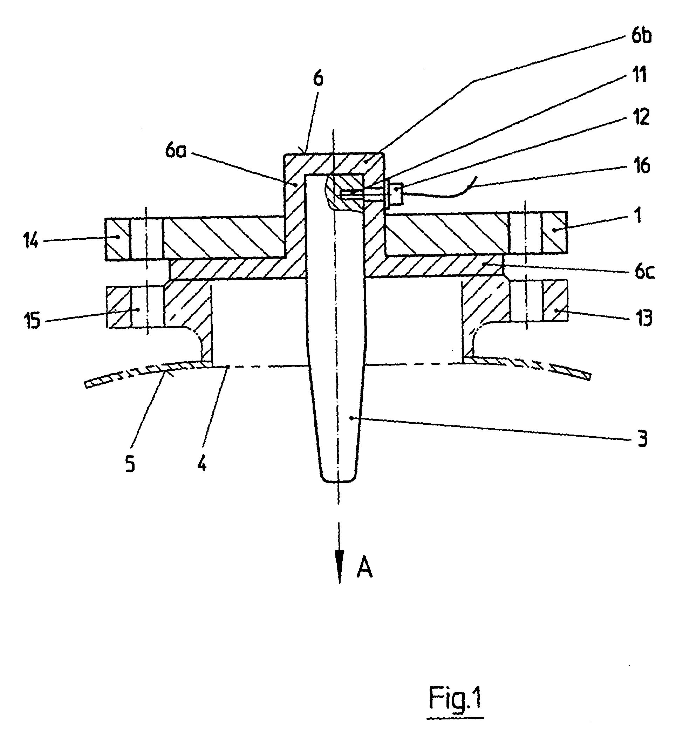

In Fig. 1 ist eine Schnittansicht einer bekannten Antenneneinrichtung nach dem Stand der Technik dargestellt. Das dargestellte Ausführungsbeispiel zeigt einen Behälterflansch 13 eines nicht näher gezeigten Behälters 5, dessen Füllstand mit einem Füllstandmessgerät ermittelt werden soll. Der Behälterflansch 13 weist eine beispielsweise kreisförmige Öffnung 4 auf, die in einen Innenraum des Behälters 5 führt. Auf den Behälterflansch 13 ist die Gehäuseunterseite des Füllstandmessgerätes montiert.

Das Füllstandmeßgerät ist ebenfalls lediglich ausschnittsweise anhand der in einem Flansch 1 der Gehäuseunterseite sitzenden Antenneneinrichtung gezeigt. Der Flansch 1 des Gehäuses des Füllstandmeßgerätes weist eine kreisförmige Öffnung auf, in der die Antenneneinrichtung sitzt. Die Öffnungen des Flansches 1 des Füllstandmeßgerätes und des Behälterflansches 13 sind konzentrisch übereinander angeordnet.

In der Öffnung des Flansches 1 des Füllstandmeßgerätes sitzt ein becherförmiger Metallmantel 6, der ein Hohlleitersystem bildet. Der Metallmantel 6 weist eine rohrförmige Seitenwandung 6a auf, welche an ihrem dem Behälter 5 abgewandten Ende mit einer Deckelwandung 6b abschließt. An dem anderen Ende der Seitenwandung 6a schließt sich eine kreisförmige Flanschauflage 6c an, die zwischen dem Flansch 1 und dem Behälterflansch 13 liegt. Die Flanschauflage 6c weist im Ausführungsbeispiel von Figur 1 ebenfalls eine Öffnung auf, die der Öffnung der rohrförmigen Seitenwandung 6a entspricht.

Der becherartige Metallmantel 6 mit seiner Deckelwandung 6b, der Seitenwandung 6a und der Flanschauflage 6c ist vorzugsweise einstückig ausgebildet und besteht aus Metall. In dem becherförmigen Metallmantel 6 sitzt das eine Ende eines Stabstrahlers 3, der sich in Richtung Behälter kegelförmig verjüngt. Zur Einkopplung von HF-Energie in den Stabstrahler 3 ist in der Seitenwandung 6a des Metallmantels 6 eine radiale Bohrung vorgesehen, in welcher eine Koaxialbuchse 12 sitzt. Innerhalb des Stabstrahlers 3 ist ein Erregerelement 11 angeordnet, das mit der Koaxialbuchse 12 elektrisch in Verbindung steht. Die Koaxialbuchse 12 ist außerhalb des Metallmantels 6 mit einer Zuleitung 16 versehen, um die HF-Energie dem Erregerlement 11 zuzuführen.

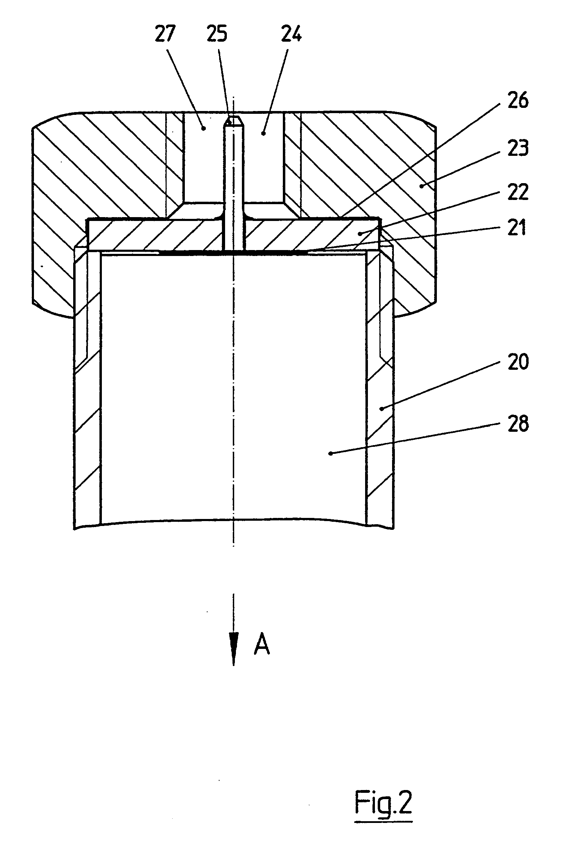

In Fig. 2 ist ausschnittsweise ein Ausführungsbeispiel der Antenneneinrichtung nach der Erfindung im Bereich der HF-Einkopplung dargestellt. Die Mikrowelleneinkopplung in den vorzugsweise runden oder elliptischen Hohlleiter 20 erfolgt durch ein am stirnseitigen Ende des Hohlleiters 20 angeordnetes planares Strahlerelement 21, das auch als Patch-Element bezeichnet wird. Der Hohlleiter hat z.B. bei einer Betriebsfrequenz von 6 GHz einen Durchmesser von etwa 40mm. Das regelmäßig aus Metall bestehende Strahlerelement 21 ist auf der Unterseite eines plattenförmigen Substrates 22 aufgebracht. Das plattenförmige Substrat 22 ist orthogonal zur Hohlleiterachse A ausgerichtet und liegt randseitig auf dem oberen Ende des Hohleiters 20 auf.

Das Substrat 22 besteht aus dielektrischem Material mit einer Dielektrizitätskonstanten ε1 und ist auf seiner Oberseite mit einer elektrisch leitenden Schicht 26, z.B. einer Metallisierung, versehen. Die elektrisch leitfähige Schicht 26 könnte jedoch auch entfallen, wenn statt dessen die Hohlleiter-Rückwand als Masse herangezogen würde. Die HF-Speisung des Strahlerelementes 21 erfolgt über einen koaxialen Anschluß 24 mit einem inneren Kontaktstift 25, welcher durch das Substrat 22 hindurchgeführt ist und mit dem Strahlerelement 21 in elektrisch leitender Verbindung steht, ohne jedoch die elektrisch leitende Schicht 26 auf der Substratoberseite zu kontaktieren. Der Lage des Verbindungspunktes von Kontaktstift 25 und Strahlerelement 21 (Feedpunkt) ist entscheidend für die Eingangsimpedanz der Antenne. Die Substratoberseite steht mit dem Außenlieter des koaxialen Anschlusses 24 in Verbindung. Hierfür ist z. B. ein metallisches Einschraubstück 23 vorgesehen, das eine mittige, sich nach oben erstreckende, topfförmige Öffnung 27 aufweist, in welche zentrisch der Kontaktstift 25 ragt, und das am oberen Ende des Hohlleiters 20 festgeschraubt ist. Das Einschraubstück 23 liegt auf der Oberseite des Substrates 22 und damit auf deren leitenden Schicht 26 auf und sorgt deshalb für die Kontaktierung von Einschraubstück 23 und elektrisch leitender Schicht 26.

Die Einspeisung von HF-Energie in das Strahlerelement 21 muß nicht notwendigerweise über den erwähnten koaxialen Anschluß 24 erfolgen. Es können auch andere geeignete Ankopplungen vorgesehen werden, z.B. eine kapazitive Ankopplung.

Das Strahlerelement 21 selbst weist z.B. eine Dicke von etwa 20µm bis etwa 30µm auf. Es weist des weiteren einen deutlich kleineren Durchmesser als der Hohlleiter 20 auf und kann z.B, viereckförmig, dreieckförmig, kreisförmig oder auch als Ring ausgebildet sein. Auch andere Formen sind möglich. Diesbezüglich wird zum Zwecke der Offenbarung ausdrücklich auf das Buch "Handbook of Microstrip Antennas" von J.R. James & P.S. Hall, Verlag IEE, Seiten 25 bis 32 verwiesen.

Bei Strukturen von Strahlerelementen 21, bei denen eine Microstrip-Zuleitung auf dem Substrat 22 realisierbar ist, kann die Eingangsimpedanz durch das gezielte Vorsehen von solchen Microstripleitungen variiert und dadurch optimal auf die HF-Speiseschaltung angepaßt werden.

Wie aus Fig. 2 weiter ersichtlich, ist das Innere des Hohlleiters mit einem Material 28, das eine Dielektrizitätskonstante ε2 aufweist, gefüllt. Das Strahlerelement 21 sitzt luftspaltfrei auf einem dielektrischen Material 28 auf.

Um im Hohlleiter 20 eine HF-Abstrahlung mit der Grundfrequenz zu erhalten, muß das Substrat 22 eine größere Dielektrizitätskonstante aufweisen als das im Hohlleiter 20 befindliche Material 28, d.h. ε1 > ε2. Ist dies nicht der Fall, wären die Abmessungen des Strahlerelementes 21 größer als der Durchmesser des Hohlleiters 20 und damit nicht mehr realisierbar.

Anzumerken ist, daß im Rahmen der vorliegenden Erfindung auch mehrere miteinander gekoppelte Strahlerelemente 21 vorgesehen werden können, sofern der Durchmesser des Hohlleiters 20 hierfür ausreicht.

Die wesentlichen Vorteile der erfindungsgemäßen Antenneneinrichtung sind gegenüber herkömmlichen Antenneneinrichtungenen folgende:
- einfachere Montage,
- Verwendung kleinerer Gehäuse bzw. Umgehäuse möglich,
- geringere Baulänge,
- einfache Herstellung,
- bei geringer Bandbreite ist eine gute Anpassung möglich.

### BEZUGSZEICHENLISTE

- 1: Flansch
- 3: Stabstrahler
- 4: Öffnung
- 5: Behälter
- 6: Metallmantel
- 11: Erregerelement
- 12: Koaxialbuchse
- 13: Behälterflansch/Antennenmasseanschluß
- 14: Bohrung
- 15: Bohrung
- 16: Zuleitung
- 20: Hohlleiter
- 21: Strahlerelement (Patch)
- 22: Substrat
- 23: Einschraubstück
- 24: koaxialer Anschluß
- 25: Kontaktstift
- 26: leitende Schicht
- 27: Öffnung
- 28: Material, Hohlleiterfüllung
- 6a: Seitenwandung
- 6b: Deckelwandung
- 6c: Flanschauflage
- 3a: Flanschauflage
- A: Hauptabstrahlrichtung

## Patentansprüche

1. Antenneneinrichtung für ein Füllstandsmess-Radargerät zum Abstrahlen von Mikrowellen entlang einer Hauptabstrahlrichtung (A) in einen Innenraum eines Behälter (5), wobei die Antenneneinrichtung einen Hohlleiter (20) und ein Erregerelement aufweist, durch welches HF-Mikrowellen in den Hohlleiter einkoppelbar sind, **dadurch gekennzeichnet, dass** ein plattenförmiges Substrat (22) vorgesehen ist, und das Innere des Hohlleiters (20) mit dielektrischen Material gefüllt ist, dass auf dem zur Hauptabstrahlrichtung (A) abgewandten stirnseitigen Ende des Hohlleiters (20) ein orthogonal zur Hauptabstrahlrichtung (A) angeordnetes planares Strahlerelement (21) (patch) als Erregerelement vorgesehen ist, welches mit einer Seite auf dem plattenförmigen Substrat (22) aufgebracht ist und welches mit der anderen Seite auf dem im Inneren des Hohlleiters (20) befindlichen dielektrischen Materials luftspaltfrei aufsitzt, wobei die Einspeisung von HF-Energie in das planare Strahlerelement (21) über einen sich entgegen der Hauptstrahlrichtung (A) erstreckenden Kontaktstift (25) erfolgt.

2. Antenneneinrichtung nach Anspruch 1,
**dadurch gekennzeichnet, dass** das Substrat (22) auf der zum Strahlerelement (21) abgewandten Oberfläche mit einer elektrisch leitenden Schicht (26) versehen ist und eine Dielektrizitätskonstante ε1 aufweist.

3. Antenneneinrichtung nach Anspruch 1,
**dadurch gekennzeichnet, dass** die Hohlleiter-Rückwand als Masse für das Dielektrikum vorgesehen ist.

4. Antenneneinrichtung nach einem der Ansprüche 1 bis 3,
**dadurch gekennzeichnet, dass** der Hohlleiter (20) mit einem Material (28) gefüllt ist, das eine Dielektrizitätskonstante ε2 aufweist.

5. Antenneneinrichtung nach Anspruch 4,
**dadurch gekennzeichnet, dass** ε1 > ε2 ist.

6. Antenneneinrichtung nach einem der Ansprüche 1 bis 5,
**dadurch gekennzeichnet, dass** das Strahlerelement (21) aus Metall besteht und eine Dicke von etwa 20 bis 30 µm aufweist.

7. Antenneneinrichtung nach einem der Ansprüche 1 bis 6;
**dadurch gekennzeichnet**, der Hohlleiter (20) ein metallisisches rundes, rechteckiges oder elliptisches Rohr ist.

8. Antenneneinrichtung nach Anspruch 7,
**dadurch gekennzeichnet, dass** der Hohlleiter etwa einen Durchmesser von 40 mm aufweist.

9. Antenneneinrichtung nach einem der Ansprüche 1 bis 8,
**dadurch gekennzeichnet, dass** mehrere Strahlerelemente (21) auf der Unterseite des Substrates (22) angeordnet und elektrisch miteinander gekoppelt werden.

10. Antenneneinrichtung nach einem der Ansprüche 1 bis 9,
**dadurch gekennzeichnet, dass** die Antenne (3) ein dielektrischer Stabstrahler, Hornantenne oder Parabolspiegelantenne ist.

## Claims

1. Antenna device for a filling level measurement radar apparatus for emitting microwaves along a main emission direction (A) into an interior of a container (5), wherein the antenna device comprises a hollow conductor (20) and an exciter element, through which HF microwaves can be coupled into the hollow conductor, **characterised in that** a plate-shaped substrate (22) is provided and the interior of the hollow conductor (20) is filled with dielectric material, **in that** a planar emitter element (21) (patch) which is arranged orthogonally to the main emission direction (A) is provided as the exciter element on the front end of the hollow conductor (20) facing away from the main emission direction (A), which emitter element is applied with one side to the plate-shaped substrate (22) and is seated with the other side on the dielectric material located in the interior of the hollow conductor (20), wherein the supply of HF energy into the planar emitter element (21) takes place via a contact pin (25) extending counter to the main emission direction (A).

2. Antenna device according to claim 1, **characterised in that** the substrate (22) is provided with an electrically conductive layer (26) on the surface facing away from the emitter element (21) and has a dielectric constant ε1.

3. Antenna device according to claim 1, **characterised in that** the hollow conductor rear wall is provided as ground for the dielectric.

4. Antenna device according to one of claims 1 to 3, **characterised in that** the hollow conductor (20) is filled with a material (28) which has a dielectric constant ε2.

5. Antenna device according to claim 4, **characterised in that** ε1 > ε2.

6. Antenna device according to one of claims 1 to 5, **characterised in that** the emitter element (21) is made of metal and has a thickness of approximately 20 to 30 µm.

7. Antenna device according to one of claims 1 to 6, **characterised in that** the hollow conductor (20) is a metallic round, rectangular or elliptical tube.

8. Antenna device according to claim 7, **characterised in that** the hollow conductor has approximately a diameter of 40 mm.

9. Antenna device according to one of claims 1 to 8, **characterised in that** a plurality of emitter elements (21) are arranged on the underside of the substrate (22) and are electrically coupled to one another.

10. Antenna device according to one of claims 1 to 9, **characterised in that** the antenna (3) is a dielectric rod emitter, horn antenna or parabolic reflector antenna.

## Revendications

1. Installation d'antenne pour un radar de mesure de niveau émettant des micro-ondes dans une direction principale de rayonnement (A) à l'intérieur d'un réservoir (5),
installation d'antenne comportant un guide d'ondes (20) et un élément d'excitation par lequel les micro-ondes HF sont couplées dans le guide d'ondes,
**caractérisée par**
un substrat (22) en forme de plaque et l'intérieur du guide d'onde (20) est rempli d'un matériau diélectrique,
l'extrémité du guide d'ondes (20), côté frontal à l'opposé de la direction principale de rayonnement (A), comporte un élément de rayonnement (21), planaire, (étiquette) comme élément d'excitation, installé perpendiculairement à la direction principale de rayonnement (A), cet élément étant appliqué par une face sur le substrat (22) en forme de plaque, et par son autre face, il vient sans laisser d'intervalle d'air, sur la matière diélectrique qui se trouve à l'intérieur du guide d'onde (20),
l'injection de l'énergie HF dans l'élément de rayonnement planaire (21), se faisant par une broche de contact (25) s'étendant dans la direction opposée à la direction principale de rayonnement (A).

2. Installation d'antenne selon la revendication 1,
**caractérisée en ce que**
le substrat (22) comporte une couche (26) électroconductrice sur la surface supérieure non tournée vers l'élément de rayonnement (21), et présente une constante diélectrique ε1.

3. Installation d'antenne selon la revendication 1,
**caractérisée en ce que**
la paroi arrière du guide d'onde est prévue comme masse pour le diélectrique.

4. Installation d'antenne selon l'une des revendications 1 à 3,
**caractérisée en ce que**
le guide d'onde (20) est rempli d'une matière (28) ayant une constante diélectrique ε2.

5. Installation d'antenne selon la revendication 4,
**caractérisée en ce qu'**
on a ε1 > ε2.

6. Installation d'antenne selon l'une des revendications 1 à 5,
**caractérisée en ce que**
l'élément de rayonnement (21) est en métal et son épaisseur est de l'ordre de 20 à 30 µm.

7. Installation d'antenne selon l'une des revendications là 6,
**caractérisée en ce que**
le guide d'onde (20) est un tube métallique de section circulaire, rectangulaire ou elliptique.

8. Installation d'antenne selon la revendication 7,
**caractérisée en ce que**
le guide d'onde a un diamètre de l'ordre de 40 mm.

9. Installation d'antenne selon l'une des revendications là 8,
**caractérisée par**
plusieurs éléments de rayonnement (21) installés sur la face inférieure du substrat (22) en étant couplés électriquement les uns aux autres.

10. Installation d'antenne selon l'une des revendications 1 à 9,
**caractérisée en ce que**
l'antenne (3) est une antenne-tige diélectrique, une antenne-cornet ou une antenne à miroir parabolique.
